# EUROPÄISCHE PATENTSCHRIFT

(11) **EP 2 099 543 B1**
(45) Veröffentlichungstag und Bekanntmachung des Hinweises auf die Patenterteilung: **12.02.2014**
(21) Anmeldenummer: 07846972.3
(22) Anmeldetag: 03.12.2007
(51) Int. Cl.: B01D 19/04, C10M 149/18, C10M 173/00, C09D 7/12, C09D 11/02, D21H 21/12, C08G 69/26, C08G 69/34, C08L 77/06, C08L 77/08

(54) **ENTSCHÄUMER FÜR WÄSSRIGE MEDIEN**
ANTIFOAMING AGENT FOR AQUEOUS MEDIA
ANTIMOUSSE POUR MILIEUX AQUEUX

(30) Priorität: 04.12.2006 DE 102006057373
(43) Veröffentlichungstag der Anmeldung: 16.09.2009
(73) Patentinhaber: BYK-Chemie GmbH, 46483 Wesel (DE)
(72) Erfinder: FRANK, Albert, 46509 Xanten (DE); LEUTFELD, Daniela, 46485 Wesel (DE); GRAWE, Dinah, 40885 Ratingen (DE); MICHELBRINK, Michaela, 46459 Rees (DE)
(74) Vertreter: Leifert & Steffan
(86) Internationale Anmeldenummer: PCT/EP2007/010488
(87) Internationale Veröffentlichungsnummer: WO 2008/067974

(56) Entgegenhaltungen:
- EP-A- 0 877 063
- GB-A- 1 207 620
- GB-A- 2 203 425
- US-A1- 2003 232 962

## Beschreibung

Die Erfindung betrifft Entschäumer für wässrige Medien, die bestimmte Polyamide als die Entschäumung entscheidend beeinflussende hydrophobe Komponente enthalten. Sie erhalten durch Einbringen in ein Trägermedium die für ihre besondere Wirksamkeit als Entschäumer erforderlichen Eigenschaften.

In vielen technischen Verfahren, die insbesondere in wässrigen Medien ablaufen, z.B. in der Fertigung von Farben und Lacken, in der Abwasserbehandlung, in der Papierherstellung, in der Textilindustrie und in der Emulsionspolymerisation, ist es notwendig, die unerwünschte Bildung von Schaum während der Herstellungs- oder Verarbeitungsprozesse zurückzudrängen oder ganz zu verhindern. Dies kann erreicht werden, indem man so genannte Antischaummittel oder Entschäumer hinzu gibt, die schon bei sehr geringen Einsatzkonzentrationen ab etwa 0,001 Gew.-% in der Lage sind, unerwünschte Schäume zu vermeiden oder zu zerstören. Aus dem Stand der Technik ist eine Vielzahl von Entschäumern bekannt, wie zum Beispiel Silikonöle, Mineralöle, hydrophobe Polyoxyalkylene, langkettige Alkohole sowie Mischungen dieser Produkte untereinander und Emulsionen daraus. Zur Verstärkung der Wirksamkeit werden häufig noch so genannte hydrophobe Festkörper in Mengen von 0, 1 bis 10 Gew.-% zugegeben, die gezielt Entnetzungsvorgänge an Schaumlamellen fördern und somit den Schaumzusammenbruch sehr wirksam unterstützen. Geeignete hydrophobe Festkörper des Standes der Technik sind entsprechende Kieselsäuren, Metallstearate, Polyolefine und Wachse oder Harnstoffe und Harnstoffderivate.

Aus der deutschen Patentschrift DE 855 688 ist bekannt, Fettsäureamide in Entschäumern als hydrophobe Festkörper einzusetzen. Es wird beschrieben, zu diesem Zweck Diamine mit speziellen Monocarbonsäuren, ausgewählt aus der Reihe der Fettsäuren, umzusetzen. Auf diese Weise erhält man in Wasser unlösliche Feststoffe, die zur weiteren Verwendung zwingend in Mischung mit einem nicht-wässrigen Lösungsmittel, wie zum Beispiel Leichtbenzin, eingesetzt werden. Eine Verwendung ohne den Zusatz des nicht-wässrigen Lösungsmittels zeigt sich bei der Schaumverhütung in wässrigen Medien als völlig unwirksam. Auch eine Mischung mit höher viskosen Ölen wird ebenfalls als nachteilig beschrieben.

In den US-Patenten US 3677963 und 3652453 werden Verfahren zum Einsatz der bereits aus der DE 855 688 bekannten Fettsäureamide beschrieben, in denen die Fettsäureamide durch einen schockartigen Abkühlprozess in eine feindisperse Form gebracht werden.
Ein anderes Verfahren zur Herstellung feindisperser Formen der bekannten Fettsäureamide besteht darin, die Fettsäureamide in der organischen Flüssigkeit auf Lösungstemperatur zu erhitzen und danach die Lösung unter kräftigem Rühren und Umschütteln schnell abzukühlen, worauf sich das Fettsäureamid als feine Dispersion abscheidet. Nachteilig bei diesem Verfahren sind unter anderem die hohen Energiekosten, die durch das Erhitzen der organischen Phasen entstehen. Darüber hinaus kann das feste Fettsäureamid auch durch Mahlen in einer beliebigen Mühle auf den erforderlichen Feinheitsgrad gebracht werden.

Nachteilig bei allen bisher bekannten Entschäumer-Systemen aus hydrophoben Festkörpern und einem Trägermedium ist das rasche Absetzen der dispergierten Festkörper aus dem Trägermedium. Dies tritt verstärkt auf bei den oben genannten Fettsäureamiden, die hergestellt sind aus Diaminen und speziellen Monocarbonsäuren, ausgewählt aus der Reihe der Fettsäuren. Dadurch wird die Lagerstabilität erheblich herabgesetzt. Zudem weisen die genannten Systeme den Nachteil auf, dass sie zwingend den Einsatz eines nicht-wässrigen Lösungsmittels, wie Leichtbenzin oder ähnliche, erfordern. Der Einsatz solcher Lösungsmittel ist jedoch nicht mehr zeitgemäß vor dem Hintergrund verschärfter Grenzwerte und Umweltauflagen.

GB-A-1 207 620 beschreibt einen Entschäumer für wässrige Medien, der mindestens ein normalerweise festes hydrophobes thermoplastisches synthetisches Polymerisat in fein verteilter Form als dispergierte Phase und eine organische Flüssigkeit als kontinuierliche Phase enthält, wobei die organische Flüssigkeit ein Nichtlösungsmittel für das hydrophobe synthetische Polymerisat ist.

Ziel der Erfindung ist es daher, einen möglichst universellen Entschäumer mit hydrophobem Festkörper bereit zu stellen, welcher mit geringem technischen Aufwand ein hohes Maß an Sicherheit in Bezug auf die Entschäumung der unterschiedlichsten wässrigen Systeme bietet. Der Entschäumer soll dabei mit Trägersystemen kompatibel sein, die den modernen Anforderungen der Arbeitssicherheit und den Umweltauflagen genügen. Außerdem sollte er sich durch eine gute Lagerstabilität auch bei erhöhter Temperatur auszeichnen.

Überraschenderweise zeigt es sich, dass Entschäumerformulierungen, die Polyamide, hergestellt aus mindestens einer Dicarbonsäure und mindestens einem Diamin, als hydrophobe Festkörper enthalten, in wässrigen Medien ausgezeichnete entschäumende Eigenschaften aufweisen.
Aufgrund der vorzugsweise linearen Polymerstruktur der Polyamide weisen sie gegenüber den bekannten Polyamiden eine verbesserte Wirksamkeit in Entschäumerformulierungen auf. Zudem lassen sich die Löslichkeit und die Verträglichkeit zu den Trägermedien durch die Möglichkeit der gezielten weiteren Umsetzung von freien Funktionalitäten mit Monoaminen und/oder Monocarbonsäuren so einstellten, dass eine erhebliche Steigerung der Entschäumerwirkung bei gleichzeitiger Optimierung der Verarbeitungsfähigkeit erzielt wird. Auf diese Weise kann zusätzlich eine sehr gute Lagerstabilität erreicht werden.

Die Polyamide lassen sich durch Polykondensation von Dicarbonsäuren, insbesondere von so genannten Dimerfettsäuren, mit Diaminen erhalten.

Besonders bevorzugt als Dicarbonsäuren werden so genannte Dimerfettsäuren eingesetzt, die durch die Dimerisierung von ungesättigten Fettsäuren hergestellt werden. In nachfolgenden Prozess-Schritten können die so erhaltenen Dimerisate durch Destillation und/oder Hydrierung aufgereinigt werden. Dabei werden Verunreinigungen durch monomere Fettsäuren und/oder trimerisierte Fettsäure entfernt. Durch eine Hydrierung kann auch die dunkle Farbe der Dimerfettsäuren stark verbessert werden.

Als Diamine können bevorzugt Diamine mit einer Kettenlänge von C4 - C36 verwendet werden. Auch Diamine, deren Kette durch Heteroatome unterbrochen wird, wie z. B. 4,9-Dioxa-1,12-dodecandiamin und α,ω-Diaminopolypropylenglykol können verwendet werden. Besonders bevorzugt sind die Diamine Hexamethylendiamin und Diaminododecan.

Bevorzugt wird die Dicarbonsäurekomponente in einem molaren Verhältnis von 1 : 2 bis 2 : 1 bezogen auf das Diamin eingesetzt.
Werden die difunktionalen Komponenten nicht in äquimolaren Mengen eingesetzt, so kann das Polyamid zusätzlich Gruppen von mindestens einem Monoamin und/oder von mindestens einer Monocarbonsäure enthalten, die zur Reaktionsmischung zugegeben werden können. Bevorzugterweise wird dadurch ebenfalls ein äquimolares Verhältnis der Säure- und Aminfunktionalitäten eingestellt.

Als Monocarbonsäuren können eingesetzt werden alle Kettenlängen von C10 - C40, bevorzugt von C16 - C26, besonders bevorzugt von C18 - C22. Dabei können diese Monocarbonsäuren auch einfach oder mehrfach ungesättigt sein. Außerdem können auch Monocarbonsäuren natürlichen Ursprungs eingesetzt werden. Oft sind diese Monocarbonsäuren natürlichen Ursprungs Mischungen von Monocarbonsäuren unterschiedlicher Kettenlänge und unterscheiden sich in der Anzahl der Doppelbindungen. Als Beispiele wären zu nennen die Caprinsäure, Laurinsäure, Myristinsäure, Palmitinsäure, Stearinsäure, Arachinsäure, Behensäure, Lignocerinsäure, Cerotinsäure, Myristoleinsäure, Palmitoleinsäure, Ölsäure, Elaidinsäure, Icosensäure, Erucasäure, Ricinolsäure, Linolsäure, Linolensäure, Arachidonsäure, Timnodonsäure und Clupanodonsäure. Es können auch Mischungen zweier oder mehrerer Fettsäuren eingesetzt werden. Diese können vor der Reaktion gemischt oder getrennt der Reaktion zugesetzt werden.

In einer bevorzugten Ausführungsform beträgt das molare Verhältnis Dicarbonsäure zu Monocarbonsäure 0,5 - 1, besonders bevorzugt 0,5 -0,8 und insbesondere bevorzugt 0,5 - 0,7.
Das molare Verhältnis von Diamin zu Monocarbonsäure beträgt dann bevorzugt 1 - 5, besonders bevorzugt 1 - 3 und insbesondere bevorzugt 1 - 1,5.

Als Monoamine können eingesetzt werden gesättigte oder einfach oder mehrfach ungesättigte primäre oder sekundäre Amine mit einer Kettenlänge von C10 - C40, bevorzugt von C12 - C30, besonders bevorzugt von C14- C24. Bevorzugt können eingesetzt werden Talgamine, gehärtet oder ungehärtet, Stearylamin, Kokosamin, und Alkylamine mit einer Kettenlänge von C16 - C22. Als sekundäre Amine werden bevorzugt eingesetzt Distearylamin, Ditalgamine und Dipalmitylamin.

In einer weiteren bevorzugten Ausführungsform beträgt das molare Verhältnis Diamin zu Monoamin 0,5 - 4, besonders bevorzugt 0,5 - 2 und insbesondere bevorzugt 0,5 - 1.
Das molare Verhältnis von Dicarbonsäure zu Monoamin beträgt dann bevorzugt 1 - 5, besonders bevorzugt 1 - 3 und insbesondere bevorzugt 1 - 1,5.

Generell können freie reaktive Gruppen, die nach der Kondensation noch verfügbar sind, weiter umgesetzt werden. Reaktive Gruppen können noch verfügbar sein, wenn die Umsetzung nicht vollständig erfolgt ist, oder wenn die Amine oder die Carbonsäuren im Überschuss eingesetzt werden.
Freie Säuregruppen können z. B. mit Aminen versalzt werden. Freie Aminogruppen können beispielsweise mit Isocyanaten umgesetzt werden oder sie werden in einer Michael-Addition an Acrylsäureester addiert. Durch diese Modifizierungen kann die Polarität der Polyamid-Ketten an die Bedürfnisse des Trägermediums oder des zu entschäumenden Lacksystems weiter angepasst werden.

Die Verfahren der Polykondensation sind dem durchschnittlichen Fachmann bekannt. Zur Entfernung des Reaktionswassers kann man entweder mit einem Schleppmittel, wie z. B. Toluol oder Xylol arbeiten, oder man arbeitet alternativ in Substanz und treibt entstehendes Reaktionswasser mittels Einleiten von Stickstoff oder durch Anlegen von Vakuum aus.

Das gewichtsmittlere Molekulargewicht der Polykondensate liegt zwischen 1000 und 10000, bevorzugt zwischen 1500 und 7000 und besonders bevorzugt zwischen 2000 und 4000.

Das entstehende Produkt ist wachsartig oder fest. Entsprechend kann das Polykondensat vor der Weiterverarbeitung aufgeschmolzen werden und dann ins Trägermedium gegeben werden. Alternativ kann das Polykondensat auch in Lösemitteln oder auch in sonstige flüssige Additive, die bei der Formulierung von Entschäumern eingesetzt werden, aufgenommen werden. Besonders bevorzugt wird man das Polykondensat in Emulgatoren aufnehmen, da diese ohnehin den meisten Entschäumerformulierungen zugesetzt werden.

Das Polykondensat bildet zusammen mit diesen Emulgatoren Gele. Die Gele sind idealerweise klar und lassen sich dann besonders einfach aufschmelzen und in die unterschiedlichen Trägermedien einarbeiten.

Die Polykondensate beziehungsweise die Mischungen aus den Polykondensaten und den Emulgatoren oder die Mischungen aus den Polykondensaten mit Lösemitteln oder anderen flüssigen Additiven werden dann im flüssigen Zustand in das Trägermedium gegeben.
Sind die Polykondensate oder die Mischungen aus den Polykondensaten und den Emulgatoren, beziehungsweise die Mischungen aus den Polykondensaten mit Lösemitteln oder anderen flüssigen Additiven, fest, werden sie vor Einsatz über ihren Schmelzpunkt hinaus erwärmt und dann im flüssigen Zustand in das Trägermedium gegeben.

Als Trägermedien können neben organischen und mineralischen Ölen auch Siloxane oder organomodifizierte Siloxane dienen.
Durch Zusatz von Emulgatoren können solche Entschäumerformulierungen auch in wässrige Emulsionen überführt werden.

Die erfindungsgemäßen Entschäumer können beispielsweise zur Entschäumung von Lacken und Druckfarben, Polymerdispersionen und Kühlschmierstoffen eingesetzt werden.

Die folgenden Beispiele erläutern die Erfindung, ohne diese zu beschränken:

### Beispiele

### Herstellungsbeispiele für die Polykondensate

### Beispiel 1

In einem 250-ml-3-Halskolben mit Rührer, Thermometer, Wasserabscheider, Rückflusskühler, Tropftrichter und Stickstoffanschluss werden bei Raumtemperatur 67,30 g Pripol 1006, 67,3 g Tallölfettsäure und 30 g Xylol vorgelegt. Unter Stickstoffatmosphäre wird auf 80°C erwärmt. Bei Erreichen dieser Temperatur werden innerhalb von 2 Minuten 37,14 g Hexamethylendiamin (70%ig in Wasser) zugeben. Bei der dann startenden exothermen Reaktion steigt die Temperatur auf 100°C. Stufenweise wird die Temperatur dann auf ca. 160°C erhöht, und bis es zum Rückfluss von Xylol kommt. Die Reaktionsmischung wird zwei Stunden bei ca. 160°C gerührt, bevor die Temperatur zur Komplettierung der Reaktion für drei Stunden auf 180°C erhöht wird. Nach Ablauf dieser Zeit ist keine Freisetzung von Reaktionswasser mehr zu beobachten. Man erhält ein oranges, klares Gel.

### Beispiel 2

In einem 250-ml-3-Halskolben mit Rührer, Thermometer, Wasserabscheider, Rückflusskühler, Tropftrichter und Stickstoffanschluss werden bei Raumtemperatur 44,51 g Pripol 1022, 30,85 g Laurinsäure und 25 g Xylol vorgelegt. Unter Stickstoffatmosphäre wird auf 70°C erwärmt. Bei Erreichen dieser Temperatur werden innerhalb von 10 Minuten 24,64 g Hexamethylendiamin (70%ig in Wasser) zugeben. Bei der dann startenden exothermen Reaktion steigt die Temperatur auf 97°C. Die Temperatur wird anschließend auf 160°C - 170°C erhöht, bis es zum Rückfluss von Xylol kommt. Nach vier Stunden Reaktionszeit sind ca. 9,0 g Wasser freigesetzt worden. Man erhält ein braunes, klares Gel.

### Beispiel 3

In einem 250-ml-3-Halskolben mit Rührer, Thermometer, Wasserabscheider, Rückflusskühler, Tropftrichter und Stickstoffanschluss werden bei Raumtemperatur 36,60 g Pripol 1006, 43,14 g Behensäure und 25 g Xylol vorgelegt. Unter Stickstoffatmosphäre wird auf 70°C erwärmt. Bei Erreichen dieser Temperatur werden innerhalb von 6 Minuten 20,26 g Hexamethylendiamin (70%ig in Wasser) zugeben. Die Temperatur wird dann auf ca. 160°C erhöht; bei dieser Temperatur beginnt der Rückfluss von Xylol. Nach vier Stunden Reaktionszeit sind ca. 8,4 g Wasser freigesetzt worden. Man erhält ein oranges, klares Gel.

### Beispiel 4

In einem 250-ml-3-Halskolben mit Rührer, Thermometer, Wasserabscheider, Rückflusskühler, Tropftrichter und Stickstoffanschluss werden bei Raumtemperatur 18,52 g Sebacinsäure, 52,18 g Ölsäure, 20,51 g Hexamethlyendiamin und 0,1 g p-Toluolsulfonsäure vorgelegt. Unter Stickstoffatmosphäre wird die Reaktionsmischung langsam aufgeschmolzen und die Temperatur auf 180°C erhöht. Das entstehende Reaktionswasser wird mittels eines leichten Stickstoffstromes entfernt. Die Reaktionsmischung wird 5 Stunden unter diesen Bedingungen gehalten. Nach Ablauf dieser Zeit ist IR-spektroskopisch keine Carbonsäure mehr erkennbar. Man erhält ein oranges, klares Gel.

### Beispiel 5

In einem 250-ml-3-Halskolben mit Rührer, Thermometer, Wasserabscheider, Rückflusskühler, Tropftrichter und Stickstoffanschluss werden bei Raumtemperatur 35,94 g Pripol 1006, 35,45 g Laurinsäure und 25 g Xylol vorgelegt. Unter Stickstoffatmosphäre wird auf 70°C erwärmt. Bei Erreichen dieser Temperatur werden innerhalb von 10 Minuten 28,61 g Hexamethylendiamin (70%ig in Wasser) zugeben. Die Temperatur wird dann auf 170°C erhöht, bis es zum Rückfluss von Xylol kommt. Nach vier Stunden Reaktionszeit wird kein Wasser mehr freigesetzt. Man erhält eine orange viskose Flüssigkeit.

### Beispiel 6

In einem 250-ml-3-Halskolben mit Rührer, Thermometer, Wasserabscheider, Rückflusskühler, Tropftrichter und Stickstoffanschluss werden bei Raumtemperatur 37,32 g Pripol 1006, 36,80 g Tallölfettsäure und 25 g Xylol vorgelegt. Unter Stickstoffatmosphäre wird auf 70°C erwärmt. Bei Erreichen dieser Temperatur werden innerhalb von 10 Minuten 25,88 g Diaminododecan zugegeben. Die Temperatur wird dann auf 170°C erhöht, bis es zum Rückfluss von Xylol kommt. Nach vier Stunden Reaktionszeit wird kein Wasser mehr freigesetzt. Man erhält eine orange viskose Flüssigkeit.

Pripol 1006 = gereinigte und hydrierte Dimersäure auf Basis Linolsäure, Uniqema, NL-Gouda
Pripol 1022 = Dimersäure auf Basis Linolsäure, Uniqema, NL-Gouda

Herstellungsbeispiele für die Partikelkonzentrate:

### Beispiel 7

100 g Polykondensat aus Beispiel 1 werden in einen 250 ml Verdampferkolben gegeben. Bei einer Ölbadtemperatur von 180°C werden mittels Rotationsverdampfer Unter einem Vakuum von < 20 mbar in 60 Minuten alle flüchtigen Bestandteile abdestilliert. 32,66 g des so gewonnenen Polykondensats werden dann bei einer Temperatur von ca. 75 - 85°C in 67,34 g Sorbitanmonooleat gelöst. Man erhält ein oranges, klares Gel.

### Beispiel 8

100 g Polykondensat aus Beispiel 3 werden in einen 250 ml Verdampferkolben gegeben. Bei einer Ölbadtemperatur von 180°C werden mittels Rotationsverdampfer unter einem Vakuum von <20 mbar in 60 Minuten alle flüchtigen Bestandteile abdestilliert. 32,66 g des sol gewonnenen Polykondensats werden dann bei einer Temperatur von ca. 80 - 85°C in 67,34 g Sorbitanmonooleat gelöst. Man erhält ein oranges, klares Gel.

### Beispiel 9

32,66 g des Polykondensats aus Beispiel 4 werden bei einer Temperatur von ca. 90 - 105°C in 67,34 g Sorbitanmonooleat gelöst. Man erhält ein oranges, leicht trübes Gel.

### Anwendungstechnische Prüfungen:

Anwendungstechnische Prüfung der erfindungsgemäßen Polyamidpartikel in einer Mineralölentschäumer-Rezeptur:
Versuch 1:
   95% Shell Ondina 941 (weißes Mineralöl, Shell, D-Hamburg) werden mit 5% Sorbitanmonooleat gemischt.
Versuch 2:
   92,5 g Shell Ondina 941 werden in einem 350 ml PE-Becher vorgelegt. Unter Scherung mit einem Dispermaten CV (4 cm-Zahnscheibe) werden bei 2000 U/min 7,5 g der aufgeschmolzenen Mischung aus Beispiel 9 zugegeben und drei Minuten bei 4000 U/min dispergiert.
Versuch 3:
   analog Versuch 2, aber mit dem Polyamid aus Beispiel 7
Versuch 4:
   analog Versuch 2, aber mit dem Polyamid aus Beispiel 8
      Die Versuche 2 - 4 beschreiben erfindungsgemäße Entschäumerformulierungen.
Versuch 5:
   92,5 g Shell Ondina 941 und 5 g Sorbitanmonooleat werden in einem 350 ml PE-Becher homogenisiert. Unter Scherung mit einem Dispermaten CV (4 cm-Zahnscheibe) werden bei 1000 U/min 2,5 g mikronisiertes EBS-Wachs (d₅₀ = 4µm) zugegeben und drei Minuten bei 4000 U/min dispergiert.
      EBS-Wachs-Mineralöl-Schmelze: 3 TI Shell Ondina 941 werden mit 1 TI EBS-Wachs bei ca. 140°C homogenisiert.
Versuch 6:
   90 g Shell Ondina 941 und 5 g Sorbitanmonooleat werden in einem 350 ml PE-Becher vorgelegt. Unter Scherung mit einem Dispermaten CV (4 cm-Zahnscheibe) werden bei 2000 U/min 10 g der EBS-Wachs-Mineralöl-Schmelze zugegeben und drei Minuten bei 4000 U/min dispergiert
Versuch 7:
   wie Versuch 6, jedoch wird die EBS-Wachs-Mineralöl-Schmelze mittels Flügelrührer bei 1000 U/min eingearbeitet und drei Minuten dispergiert.
Versuch 8:
   92,5 g Shell Ondina und 5 g Sorbitanmonooleat und 2,5 g EBS-Wachs werden in einem 250 ml Stahlgefäß vorgelegt und durch Erhitzen auf ca. 140°C homogenisiert. Danach wird bei einer Scherung von 4000 U/min (Dispermaten CV (4 cm-Zahnscheibe) die Mischung bis unter den Schmelzpunkt des EBS-Wachses gekühlt und die Mischung dann mit geringerer Scherung auf eine Temperatur < 50°C abgekühlt.
Versuch 9:
   wie Versuch 8, jedoch wird während der Abkühlphase nur mit einem Flügelrührer bei 1000 U/min geschert.

### EBS-Wachs = 1,2-Ethylenbis(stearamid)

Die Entschäumerformulierungen aus den Versuchen 1 - 9 werden in einer Dispersionsfarbe auf Basis Acronal 290 D auf ihre entschäumende Wirkung untersucht.

### Testsystem Dispersionsfarbe Basis Acronal 290 D

Rezeptur (in %):

| | | | |
|---|---|---|---|
| 1. | Wasser | 3,50 | |
| 2. | Calgon N 10% in Wasser | 1,45 | BK Guilini Chemie, D-Ladenburg |
| 3. | Collacral VAL | 4,80 | BASF, D-Ludwigshafen |
| 4. | Emulan OC 20% in Wasser | 2,40 | BASF, D-Ludwigshafen |
| 5. | Ammoniak 25% ig | 1,00 | |
| 6. | Parmetol A 26 | 0,30 | Schülke & Mayr, D-Norderstedt |
| 7. | Kronos 2059 | 24,00 | Kronos Titan, D-Leverkusen |
| 8. | Testbenzin K30 | 0,25 | |
| 9. | Butyglykol | 2,90 | |
| 10. | Acronal 290 D | 48,00 | BASF, D-Ludwigshafen |
| 11. | Wasser | 11,40 | |
| | | 100,00 | |

Herstellungsvorschrift
Position 1 - 6 mischen, Position 7 unter Rühren zugeben und 20 min dispergieren, (Dispergierung 20 min 9,8 m/s = 1865U/min d= 10cm).
Position 8 und 9 mischen und unter Rühren zugeben. Position 10 und 11 unter Rühren zugeben. Alles noch 15 min bei 930U/min rühren.

Einarbeitung und Prüfung des Entschäumers:
In einem 175 ml-PE-Becher werden 50 g Dispersionsfarbe eingewogen und
0,5% des zu prüfenden Entschäumers zudosiert.
Einarbeitung: Dissolver, Zahnscheibe d = 4 cm, 2 min. bei 1865 U/min. = 4 m/s
Die Probe wird vor Applikation 16 - 24 Stunden bei Raumtemperatur gelagert.
Danach werden 30 g der Probe mit einer offenporigen Schaumstoffrolle auf eine Kontrastkarte (lackiert, Nr. 2801, BYK-Gardner, Größe ca. 28 cm x 21 cm) aufgerollt. Die Schaumstoffrolle (5,5 cm breit, d = 8 cm, mit Griff, Nr. 3918730, Fa. Friess) wird vor jeder Prüfung mit Wasser ausgewaschen, anschließend ausgewrungen und auf einem Handtuch so gut wie möglich trockengerollt.

Ergebnis der Prüfung:

| | Beschreibung | Entschäumung |
|---|---|---|
| Versuch 1 | Entschäumer ohne Partikel | 5 |
| Versuch 2 | Entschäumer mit Polyamidpartikel aus Beispiel 9 | 0-1 |
| Versuch 3 | Entschäumer mit Polyamidpartikel aus Beispiel 7 | 1 |
| Versuch 4 | Entschäumer mit Polyamidpartikel aus Beispiel 8 | 0-1 |
| Versuch 5 | Entschäumer mit mikronisiertem EBS-Wachs, d₅₀ = 4µm | 4 |
| Versuch 6 | Entschäumer mit EBS-Wachs nach Quick-Chill-Prozess, dispergiert | 3 |
| Versuch 7 | Entschäumer mit EBS-Wachs nach Quick-Chill-Prozess, gerührt | 4 |
| Versuch 8 | Entschäumer mit EBS-Wachs nach Schmelz-Prozess, dispergiert | 4-5 |
| Versuch 9 | Entschäumer mit EBS-Wachs nach Schmelz-Prozess, gerührt | 4-5 |

Bewertung:
0 = komplette Entschäumung
5 = keine entschäumende Wirkung

Die Entschäumerformulierungen, die die erfindungsgemäßen Polyamidpartikel enthalten, zeichnen sich durch eine sehr gute Lagerstabilität aus.

Anwendungstechnische Prüfung der erfindungsgemäßen Polyamidpartikel in einer Polyglykolentschäumer-Rezeptur

Versuch 10:
93,8 g Polyglycol P 4000 (Dow Chemical, USA-Midland) werden mit 6,2 g Sorbitanmonooleat gemischt.

Versuch 11:
2,5 TI des Polyamids aus Beispiel 4 werden mit 5 TI Sorbitanmonooleat unter Erwärmen auf ca. 100°C homogenisiert. 90,8 g Polyglycol P 4000 werden in einem 350 ml PE-Becher vorgelegt. Unter Scherung mit einem Dispermaten CV (4 cm-Zahnscheibe) werden bei 3000 U/min 9,2 g der Mischung aus Polyamid und Sorbitanmonooleat zugegeben und drei Minuten bei 4000 U/min dispergiert.

Versuch 12:
analog Versuch 11, aber mit dem Polyamid aus Beispiel 1

Versuch 13:
analog Versuch 11, aber mit dem Polyamid aus Beispiel 3

Die Versuche 11 - 13 beschreiben erfindungsgemäße Entschäumerformulierungen.

Versuch 14:
93,8 g Polyglycol P 4000 und 6,13 g Sorbitanmonooleat werden in einem 350 ml PE-Becher homogenisiert. Unter Scherung mit einem Dispermaten CV (4 cm-Zahnscheibe) werden bei 1000 U/min 3,07 g mikronisiertes EBS-Wachs (d₅₀ = 4µm) zugegeben und drei Minuten bei 4000 U/min dispergiert.

Die Entschäumerformulierungen aus den Versuchen 10 - 14 werden in einer Dispersionsfarbe auf Basis Mowilith DM 611 auf ihre entschäumende Wirkung untersucht.

### Testsystem Dispersionsfarbe auf Basis Mowilith DM 611

Rezeptur (in %):

| | | | |
|---|---|---|---|
| 1. | Wasser | 17,70 | |
| 2. | Calgon N 10%ig in Wasser | 2,00 | BK Guilini Chemie, D-Ladenburg |
| 3. | Ammoniak 32% ig | 0,30 | |
| 4. | Parmetol A 26 | 0,20 | Schülke & Mayr, D-Norderstedt |
| 5. | BYK-154 | 0,80 | BYK-Chemie, D-Wesel |
| 6. | Natrosol 250 HHR | 0,20 | Hercules, USA-Wilmington |
| 7. | Titandioxid RHD-2 | 20,00 | |
| 8. | Finntalk M 15 | 6,00 | Omya, D-Köln |
| 9. | Durcal 5 | 17,00 | Omya, D-Köln |
| 10. | Socal P2 | 4,00 | Solvay, B-Brüssel |
| 11. | Mowilith DM 611 | 29,50 | Celanese, USA-Dallas |
| 12. | Viscalex HV 30 | 0,30 | Ciba, CH-Basel |
| 13. | Testbenzin | 1,30 | |
| 14. | Texanol | 0,70 | |
| | | 100,00 | |

Herstellungsvorschrift:
Position 1 - 5 mischen, Position 6 unter Rühren zugeben und 10-15 min rühren bis das Natrosol gelöst ist. Position 7 - 10 mischen und unter Rühren zugeben. Dispergierung: 15 min 3730 U/min. Position 11 unter Rühren zugeben, Position 12 zugeben, Position 13 und 14 mischen und unter Rühren zugeben. Alles noch 5 min bei 930 U/min rühren.

Einarbeitung und Prüfung des Entschäumers:
In einem 175 ml-PE-Becher werden 50 g Dispersionsfarbe eingewogen und
0,5 % des zu prüfenden Entschäumers zudosiert.
Einarbeitung: Dissolver, Zahnscheibe d = 4 cm, 2 min. bei 1865 U/min. = 4 m/s
Die Probe wird vor Applikation 16 - 24 Stunden bei Raumtemperatur gelagert.
Danach werder 30 g der Probe mit einer offenporigen Schaumstoffrolle auf eine Kontrastkarte (lackiert, Nr. 2801, BYK-Gardner, Größe ca. 28 cm x 21 cm) aufgerollt. Die Schaumstoffrolle (5,5 cm breit, d = 8 cm, mit Griff, Nr. 3918730, Fa. Friess) wird vor jeder Prüfung mit Wasser ausgewaschen, anschließend ausgewrungen und auf einem Handtuch so gut wie möglich trocken gerollt.

Ergebnis der Prüfung:

| | Beschreibung | Entschäumung |
|---|---|---|
| Versuch 10 | Entschäumer ohne Partikel | 5 |
| Versuch 11 | Entschäumer mit Polyamidpartikel aus Beispiel 4 | 1-2 |
| Versuch 12 | Entschäumer mit Polyamidpartikel aus Beispiel 1 | 2 |
| Versuch 13 | Entschäumer mit Polyamidpartikel aus Beispiel 3 | 2 |
| Versuch 14 | Entschäumer mit mikronisiertem EBS-Wachs, d₅₀ = 4µm | 5 |

Bewertung:
0 = komplette Entschäumung
5 = keine entschäumende Wirkung

Die Entschäumerformulierungen, die die erfindungsgemäßen Polyamidpartikel enthalten, zeichnen sich durch eine sehr gute Lagerstabilität aus. Die Entschäumerformulierungen, die EBS-Wachs enthalten, sind nicht lagerstabil.

## Patentansprüche

1. Verwendung eines Polyamids, hergestellt aus mindestens einem Diamin und mindestens einer Dicarbonsäure, in einer Formulierung zur Entschäumung von wässrigen Medien, **dadurch gekennzeichnet, dass** zur Herstellung der Formulierung das Polyamid In flüssigem Zustand in einem Trägermedium, ausgewählt aus der Gruppe bestehend aus organischen Ölen, mineralischen Ölen, Slioxanen und organomodifizierten Siloxanen, dispergiert wird.

2. Verwendung nach Anspruch 1, **dadurch gekennzeichnet, dass** das Polyamid zusätzlich Gruppen von mindestens einem Monoamin und/oder von mindestens einer Monocarbonsäure enthält.

3. Verwendung nach Anspruch 1 oder 2, **dadurch gekennzeichnet, dass** das Poly-amid In einem Emulgator aufgenommen wird.

4. Verwendung nach einem der vorhergehenden Ansprüche, **dadurch gekennzeichnet, dass** das Diamin eine Kettenlänge von C4 - C36 aufweist.

5. Verwendung nach einem der vorhergehenden Ansprüche, **dadurch gekennzeichnet, dass** das Diamin Hexamethylandiamin und/oder Diaminododecan ist.

6. Verwendung nach einem der vorhergehenden Ansprüche, **dadurch gekennzeichnet, dass** die Dicarbonsäure eine Kettenlänge von mindestens C10 aufweist.

7. Entschäumer für wässrige Medlen, **dadurch gekennzeichnet, dass** der Entschäumer mindestens ein Polyamid, hergestellt aus mindestens einem Diamin und mindestens einer Dicarbonsäure, enthält, und dass zur Herstellung des Entschäumers das Polyamid in flüssigem Zustand in einem Trägermedium, ausgewählt aus der Gruppe bestehend aus organischen Ölen, mineralischen Ölen, Siloxanen und organomodifizierten Siloxanen, dispergiert worden ist.

8. Entschäumer nach Anspruch 7, **dadurch gekennzeichnet, dass** das Polyamid zusätzlich Gruppen von mindestens einem Monoamin und/oder von mindestens einer Monocarbonsäure enthält.

9. Entschäumer nach Anspruch 7 oder 8, **dadurch gekennzeichnet, dass** das Diamin eine Kettenlänge von C4 - C36 aufweist.

10. Entschäumer nach einem der Ansprüche 7 bis 9, **dadurch gekennzeichnet, dass** das Diamin Hexamethylendiamin und/oder Diaminododecan ist.

11. Entschäumer nach einem der vorhergehenden Ansprüche 7 bis 10, **dadurch gekennzeichnet, dass** die Dicarbonsäure eine Kettenlänge von mindestens C10 aufweist.

12. Entschäumer nach einem der vorhergehenden Ansprüche 7 bis 11, **dadurch gekennzeichnet, dass** die Dicarbonsäure eine Dimerfettsäure ist.

13. Entschäumer nach einem der vorhergehenden Ansprüche 7 bis 12, **dadurch gekennzeichnet, dass** die Monocarbonsäure eine Kettenlänge von C10 - C40, bevorzugt von C16 - C26, besonders bevorzugt von C18 - C22, aufweist.

14. Entschäumer nach einem der vorhergehenden Ansprüche 7 bis 13, **dadurch gekennzeichnet, dass** die Monocarbonsäure Caprinsäure, Laurinsäure, Myrlstlnsäure, Palmitinsäure, Stearinsäure, Arachinsäure, Behensäure, Lignocerinsäure, Cerotinsäure, Myristoleinsäure, Palmitoleinsäure, Ölsäure, Elaidinsäure, Icosensäure, Erucasäure, Ricinolsäure, Linolsäure, Linolensäure, Arachidonsäure, Timnodonsäure, Clupanodonsäure und/oder eine Mischung davon ist.

15. Verwendung eines Entschäumers nach einem der Ansprüche 7 bis 14 in Lacken, Druckfarben, Polymerdispersionen, Kühlschmierstoffen oder bei der Herstellung von Papier.

## Claims

1. Use of a polyamide, prepared from at least one diamine and at least one dicarboxylic acid in a formulation for defoaming aqueous media, **characterized in that** for the preparation of the formulation the polyamide is dispersed in a liquid state in a carrier medium selected from the group consisting of organic oils, mineral oils, siloxanes and organically modified siloxanes.

2. Use according to Claim 1, **characterized in that** the polyamide further contains groups of at least one monoamine and/or of at least one monocarboxylic acid.

3. Use according to Claim 1 or 2, **characterized in that** the polyamide is taken up in an emulsifier.

4. Use according to any one of the preceding claims, **characterized in that** the diamine has a chain length of C4 - C36.

5. Use according to any one of the preceding claims, **characterized in that** the diamine is hexamethylenediamine and/or diaminododecane.

6. Use according to any one of the preceding claims, **characterized in that** the dicarboxylic acid has a chain length of at least C10.

7. Defoamer for aqueous media, **characterized in that** the defoamer comprises at least one polyamide prepared from at least one diamine and at least one dicarboxylic acid and that for the preparation of the defoamer the polyamide has been dispersed in a liquid state in a carrier medium selected from the group consisting of organic oils, mineral oils, siloxanes and organically modified siloxanes.

8. Defoamer according to Claim 7, **characterized in that** the polyamide further contains groups of at least one monoamine and/or of at least one monocarboxylic acid.

9. Defoamer according to Claim 7 or 8, **characterized in that** the diamine has a chain length of C4 - C36.

10. Defoamer according to any one of Claims 7 to 9, **characterized in that** the diamine is hexamethylenediamine and/or diaminododecane.

11. Defoamer according to any one of the preceding Claims 7 to 10, **characterized in that** the dicarboxylic acid has a chain length of at least C10.

12. Defoamer according to any one of the preceding Claims 7 to 11, **characterized in that** the dicarboxylic acid is a dimer fatty acid.

13. Defoamer according to any one of the preceding Claims 7 to 12, **characterized in that** the monocarboxylic acid has a chain length of C10 - C40, preferably of C16 - C26, more preferably of C18 - C22.

14. Defoamer according to any one of the preceding Claims 7 to 13, **characterized in that** the monocarboxylic acid is capric acid, lauric acid, myristic acid, palmitic acid, stearic acid, arachidic acid, behenic acid, lignoceric acid, cerotic acid, myristoleic acid, palmitoleic acid, oleic acid, elaidic acid, eicosenoic acid, erucic acid, ricinoleic acid, linoleic acid, linolenic acid, arachidonic acid, timnodonic acid, clupanodonic acid and/or a mixture thereof.

15. Use of a defoamer according to any one of Claims 7 to 14 in paints, printing inks, polymer dispersions, cooling lubricants or in papermaking.

## Revendications

1. Utilisation d'un polyamide, produit d'au moins une diamine et d'au moins un acide dicarboxylique, dans une formulation pour le traitement anti-mousse des milieux aqueuses, **caractérisée en ce que**, pour la production de la formulation, le polyamide est dispersé sous forme de liquide dans un milieu porteur qui est sélectionné dans le groupe consistant en des huiles organiques, des huiles minérales, des siloxanes et des siloxanes organomodifiés.

2. Utilisation selon la revendication 1, **caractérisée en ce que** le polyamide contient aussi des groupes d'au moins une monoamine et/ou d'au moins un acide monocarboxylique.

3. Utilisation selon la revendication 1 ou 2, **caractérisée en ce que** le polyamide est reçu dans un émulsifiant.

4. Utilisation selon l'une des revendications précédentes, **caractérisée en ce que** la diamine présente une longueur de chaîne de C4 à C36.

5. Utilisation selon l'une des revendications précédentes, **caractérisée en ce que** la diamine est de la héxaméthylène-diamine et/ou du diaminododécane.

6. Utilisation selon l'une des revendications précédentes, **caractérisée en ce que** l'acide dicarboxylique présente une longueur de chaîne d'au moins C10.

7. Agent anti-mousse pour milieux aqueux, **caractérisé en ce que** l'agent anti-mousse contient au moins un polyamide, produit d'au moins une diamine et au moins un acide dicarboxylique, et **en ce que** le polyamide est dispersé, sous forme de liquide, dans un milieu porteur qui est sélectionné dans le groupe consistant en des huiles organiques, des huiles minérales, des siloxanes et des siloxanes organomodifiés.

8. Agent anti-mousse selon la revendication 7 ou 8, **caractérisé en ce que** le polyamide contient aussi des groupes d'au moins une monoamine et/ou d'au moins un acide monocarboxylique.

9. Agent anti-mousse selon la revendication 7 ou 8, **caractérisée en ce que** la diamine présente une longueur de chaîne de C4 à C36.

10. Agent anti-mousse selon l'une des revendications 7 à 9, **caractérisé en ce que** la diamine est de la héxaméthylène-diamine et/ou du diaminododécane.

11. Agent anti-mousse selon l'une des revendications précédentes 7 à 10, **caractérisé en ce que** l'acide dicarboxylique présente une longueur de chaîne d'au moins C10.

12. Agent anti-mousse selon l'une des revendications précédentes 7 à 11, **caractérisé en ce que** l'acide dicarboxylique est un acide gras dimérique.

13. Agent anti-mousse selon l'une des revendications précédentes 7 à 12, **caractérisé en ce que** l'acide monocarboxylique présente une longueur de chaîne de C10 à C40, de préférence de C16 à C26, plus préférablement de C18 à C22.

14. Agent anti-mousse selon l'une des revendications précédentes 7 à 13, **caractérisé en ce que** l'acide monocarboxylique est l'acide caprique, l'acide laurique, l'acide myristique, l'acide palmitique, l'acide stéarique, l'acide arachidique, l'acide béhénique, l'acide lignocérique, l'acide cérotique, l'acide myristoléique, l'acide palmitoléique, l'acide oléique, l'acide élaïdique, l'acide icosénique, l'acide érucique, l'acide ricinoléique, l'acide linoléique, l'acide linolénique, l'acide arachidonique, l'acide timnodonique, l'acide clupanodonique et/ou un mélange de ceux-ci.

15. Utilisation d'un agent anti-mousse selon l'une des revendications 7 à 14 dans des vernis, des couleurs d'imprimerie, des dispersions polymériques, des lubrifiants réfrigérants ou dans la production du papier.
